Europäisches Patentamt

European Patent Office

Office européen des brevets

(11) Veröffentlichungsnummer: **0 350 725**
**A2**

## EUROPÄISCHE PATENTANMELDUNG

(21) Anmeldenummer: 89111853.1

(51) Int. Cl.4: **B23Q 11/10**

(22) Anmeldetag: 29.06.89

(30) Priorität: 09.07.88 DE 3823349

(43) Veröffentlichungstag der Anmeldung:
17.01.90 Patentblatt 90/03

(54) Benannte Vertragsstaaten:
CH DE ES FR GB IT LI SE

(71) Anmelder: SIMON NANN KG Fabrik für
Spannwerkzeuge
Bubsheimer Strasse 9
D-7205 Böttingen(DE)

(72) Erfinder: Nann, Eugen, Dipl.-Ing.
Bubsheimer Strasse 11
D-7205 Böttingen(DE)

(74) Vertreter: Patentanwälte Dipl.-Ing. Klaus
Westphal Dr. rer. nat. Bernd Mussgnug Dr.
rer.nat. Otto Buchner
Waldstrasse 33
D-7730 VS-Villingen(DE)

(54) Spannfutter für Werkzeuge mit axialer innerer Kühlmittelzufuhr.

(57) Ein Spannfutter für Werkzeuge mit innerer Kühlmittelzufuhr, mit einer Spannzange (1), mit einer
Spannmutter (3) und einer Spannzangenaufnahme
(4), die von einem koaxialen Kühlmittelkanal durchsetzt ist, ist durch ein Dichtelement (5) zwischen der
Spannzangenaufnahme (4) und dem Schaft (2) des
eingesetzten Werkzeuges (10) abgedichtet.

EP 0 350 725 A2

## Spannfutter für Werkzeuge mit axialer innerer Kühlmittelzufuhr

Die Erfindung betrifft ein Spannfutter für Werkzeuge mit axialer innerer Kühlmittelzufuhr gemäß dem Oberbegriff des Anspruches 1.

Bei einem aus der US-PS 3 024 030 bekannten Spannfutter dieser Gattung ist das Dichtelement ein O-Ring, der zwischen die hintere axiale Stirnfläche des Werkzeugschaftes und die axiale Stirnfläche der Spannzangenaufnahme, durch die der Kühlmittelkanal austritt, eingesetzt ist. Der O-Ring bewirkt eine Abdichtung für das Kühlmittel, das durch den Kühlmittelkanal der Spannzangenaufnahme in den Schaft des Werkzeuges zugeführt wird. Es wird dadurch verhindert, daß das Kühlmittel außen am Werkzeugschaft an der Spannzange und durch deren Schlitze austritt.

Bei diesem bekannten Spannfutter wird das Werkzeug in der Spannzangenaufnahme axial durch das elastisch verformbare Dichtelement abgestützt. Ein unterschiedlich starkes axiales Zusammendrücken des Dichtelementes hat zur Folge, daß das Werkzeug unterschiedlich weit aus dem Spannfutter axial vorragt. Es ergeben sich Bearbeitungsungenauigkeiten in Axialrichtung, z.B. unterschiedlich tiefe Bohrlöcher. Bei numerisch gesteuerten Werkzeugmaschinen ist es weiter üblich, unterschiedliche axiale Bearbeitungslängen, z.B. unterschiedliche Bohrlochtiefen, mit gleichen Werkzeugen, z.B. Bohrern gleicher Länge, herzustellen und den unterschiedlichen axialen Bearbeitungsweg dadurch zu bewirken, daß in die innere axiale Stirnfläche der Spannzangenaufnahme ein Anschlag eingesetzt wird, an welchem sich der Werkzeugschaft axial abstützt, so daß das Werkzeug in unterschiedlicher axialer Lage in dem Spannfutter gehalten ist. In diesem Falle müßten bei dem bekannten Spannfutter zwei Abdichtungen vorgesehen sein, nämlich eine Abdichtung zwischen der Spannzangenaufnahme und dem Anschlag und eine Abdichtung zwischen dem Anschlag und dem Schaft des Werkzeuges. Der Aufwand wird hierdurch vergrößert und die axialen Bearbeitungsfehler durch Kompression der Dichtelemente summieren sich.

Weiter ist es bekannt, eine Abdichtung für die innere Kühlmittelzufuhr dadurch zu bewirken, daß die Schlitze der Spannzange mit Gummi oder einem elastischen Kunststoff ausgefüllt sind, wie dies für Werkstück-Spannzangen in dem DE-GM 70 26 156 beschrieben ist. Hierbei ergibt sich zwar eine Abdichtung der Schlitze der Spannzange, jedoch nur eine un genügende Abdichtung zwischen Spannzange und Werkzeug sowie zwischen Spannzange und Spannzangenaufnahme. Größere Mengen des in die Schlitze eingebrachten Dichtungsmaterials verbessern zwar die Dichtwirkung, verursachen aber einen höheren Widerstand beim Spannen des Werkzeuges und verschlechtern somit die Spannwirkung. Geringere Mengen des Dichtungsmaterials erleichtern zwar das Spannen, führen aber schneller zur Undichtigkeit.

Der Erfindung liegt die Aufgabe zugrunde, eine Abdichtung für ein Spannfutter für Werkzeuge mit axialer innerer Kühlmittelzufuhr zu schaffen, die bei guter Abdichtung eine exakte axiale Positionierung des Werkzeuges zuläßt.

Diese Aufgabe wird bei einem Spannfutter der eingangs genannten Gattung erfindungsgemäß gelöst durch die Merkmale des kennzeichnenden Teiles des Anspruches 1.

Vorteilhafte Ausführungsformen der Erfindung sind in den Unteransprüchen angegeben.

Bei dem erfindungsgemäßen Spannfutter dichtet das Dichtelement einerseits an der Innenwand der Spannzangenaufnahme und andererseits am Außenumfang des Schaftes des Werkzeuges ab. Die Abdichtung erfolgt somit unabhängig von der axialen Lage des Werkzeuges in dem Spannfutter. Die axial hintere Stirnfläche des Werkzeugschaftes stützt sich unmittelbar auf der axialen Stirnfläche der Spannzangenaufnahme oder eines in diese Stirnfläche eingesetzten Anschlages ab. Es ergibt sich damit eine Metall-Metall-Abstützung, die eine exakte axiale Position des Werkzeuges gewährleistet. Ein gegebenenfalls zur axialen Positionierung des Werkzeuges zwischen die axiale Endfläche des Werkzeugschaftes und die Spannzangenaufnahme eingesetzter Anschlag muß nicht zusätzlich abgedichtet werden.

Die Form des Dichtelementes kann den jeweiligen Erfordernissen angepaßt sein. Um ein Abdichten von Werkzeugen zu ermöglichen, deren Schaft nicht an der hinteren Stirnfläche der Spannzangenaufnahme anliegt, kann die Spannzange in vorteilhafter Ausführung an ihrem hinteren Ende eine erweiterte zylindrische Ausnehmung aufweisen, in die sich das hülsenförmige Dichtelement mit seinem vorderen Teil einpaßt, während es mit seinem hinteren Teil an der Innenwand der Spannzangenaufnahme abdichtet. Falls der Schaft des Werkzeuges in eingespanntem Zustand bis an das Ende der Spannzangenaufnahme reicht, kann das Dichtelement auch ringförmig ausgeführt sein.

Die äußere Dichtfläche des Dichtelementes dichtet immer hinter der Spannzange mit der Spannzangenaufnahme ab. Sie ist zweckmäßig als Dichtlippe ausgebildet, die durch die Spannzangenaufnahme leicht radial zusammengedrückt wird und dadurch unter Druck an deren Innenwand abdichtend anliegt. Die innere Dichtfläche ist vorteilhaft auch als Dichtlippe ausgebildet; beim Einsetzen eines Werkzeuges wird sie aufgeweitet und liegt unter radialem Druck am Schaft des Werkzeuges an. Die Lage der inneren Dichtfläche richtet sich nach den geometrischen Bedingungen, insbesondere nach Schaftlänge und -durchmesser des eingesetzten Werkzeuges. So wird die innere Dichtfläche in der Regel im vorderen Teil des Dichtelementes vorgesehen sein, sie kann jedoch auch im axialen Bereich der äußeren Dichtfläche oder sogar axial hinter dieser liegen.

In vorteilhafter Ausführung besteht das Dichtelement aus einem elastischen Kunststoff, beispielsweise aus Polyäthylen, Polypropylen, Polyurethan, Polytetrafluoräthylen, Neopren, Acrylnitril oder Äthylenpropylen.

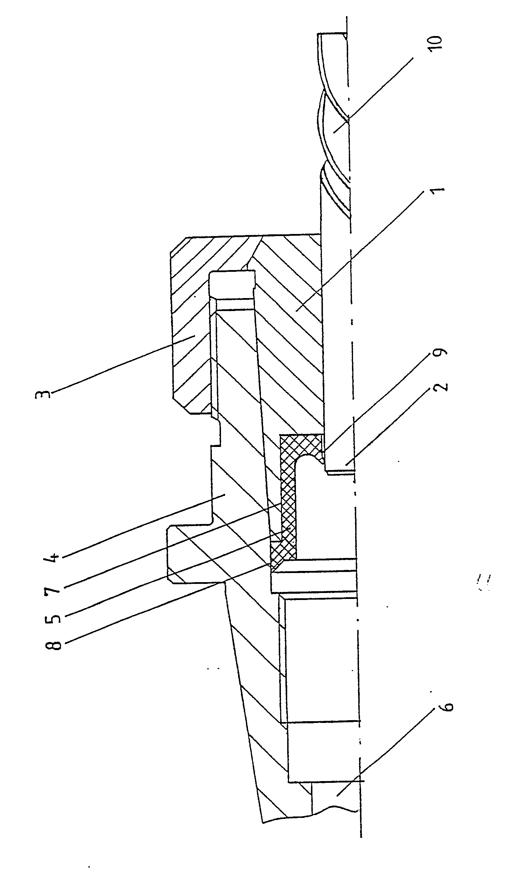

Eine bevorzugte Ausführung der Erfindung ist in der Zeichnung dargestellt und nachstehend ausführlich erläutert.

Die einzige Figur zeigt einen Längsschnitt durch ein Spannfutter mit eingesetztem Werkzeug.

Das Spannfutter besteht in herkömmlicher Weise im wesentlichen aus der Spannzange 1, der Spannzangenaufnahme 4 und der Spannmutter 3. Die Spannzange 1 sitzt innerhalb der Spannzangenaufnahme 4 und wird von der Spannmutter 3 gehalten. Das Spannen erfolgt durch Anziehen der Spannmutter. Der Kegel der Spannzange verjüngt sich vom vorderen, dem Werkzeug 10 zugewandten Ende in Richtung zum hinteren Ende des Spannfutters. Die Spannzangenaufnahme 4 ist von einem Kühlmittelkanal 6 durchsetzt, über den das Kühlmittel in den Schaft 2 des Werkzeuges 10 geleitet wird.

Erfindungsgemäß dichtet ein hülsenförmig ausgebildetes Dichtelement 5 mit einer äußeren Dichtfläche 8 an der Innenwand der Spannzangenaufnahme 4 hinter der Spannzange 1 ab. Die äußere Dichtfläche 8 geht in Richtung zum hinteren, dem Werkzeug abgewandten Ende hin in eine dünne Dichtlippe über, die zum Ende hin spitz zuläuft und sich an der Innenwand der Spannzangenaufnahme 4 dichtend anlegt. Der vordere Teil des Dichtelementes 5 ist zylindrisch ausgeführt und in eine zylindrische Ausnehmung 7 der Spannzange 1 eingeschoben. Am vorderen Ende des Dichtelementes 5 ist eine innere Dichtfläche 9 vorgesehen, die als Dichtlippe ausgebildet ist. Die Dichtlippe weist nach hinten und wird beim Einsetzen des Werkzeuges 10 aufgeweitet, so daß sie direkt am Schaft 2 des Werkzeuges 10 dichtend anliegt.

Das Dichtelement 5 besteht aus Polyäthylen und ist als einfaches Spritzgußteil herstellbar.

## Ansprüche

1. Spannfutter für Werkzeuge mit axialer innerer Kühlmittelzufuhr durch den Schaft, mit einer Spannzange, mit einer Spannmutter, mit einer Spannzangenaufnahme, die einen axialen Kühlmittelkanal aufweist, und mit einem zwischen der Spannzangenaufnahme und dem Schaft des im Spannfutter gespannten Werkzeuges zu dem Kühlmittelkanal koaxial angeordneten Dichtelement, dadurch gekennzeichnet, daß das Dichtelement (5) mit einer äußeren Dichtfläche (8) hinter der Spannzange (1) an der Innenwand der Spannzangenaufnahme (4) dichtend anliegt und mit einer inneren Dichtfläche (9) an dem Außenumfang des Schaftes (2) des Werkzeuges (10) dichtend anliegt.

2. Spannfutter nach Anspruch 1, dadurch gekennzeichnet, daß das Dichtelement (5) hülsenförmig ausgebildet ist.

3. Spannfutter nach Anspruch 1, dadurch gekennzeichnet, daß das Dichtelement (5) ringförmig ausgebildet ist.

4. Spannfutter nach Anspruch 2, dadurch gekennzeichnet, daß die Spannzange (1) an ihrem hinteren axialen Ende innen eine erweiterte koaxiale zylindrische Ausnehmung (7) zur Aufnahme des Dichtelementes (5) aufweist.

5. Spannfutter nach Anspruch 4, dadurch gekennzeichnet, daß das Dichtelement (5) aus einem vorderen zylindrischen Teil besteht, dessen Außendurchmesser der Ausnehmung (7) der Spannzange (1) angepaßt ist, und aus einem hinteren Teil mit größerem Durchmesser, dessen Außenfläche die äußere Dichtfläche (8) bildet.

6. Spannfutter nach einem der vorhergehenden Ansprüche, dadurch gekennzeichnet, daß die innere Dichtfläche (9) des Dichtelementes (5) am vorderen Ende des Dichtelementes vorgesehen ist.

7. Spannfutter nach einem der vorhergehenden Ansprüche, dadurch gekennzeichnet, daß die innere Dichtfläche (9) des Dichtelementes (5) eine Dichtlippe aufweist.

8. Spannfutter nach einem der vorhergehenden Ansprüche, dadurch gekennzeichnet, daß das Dichtelement (5) aus einem elastischen Kunststoff besteht.

9. Spannfutter nach einem der vorhergehenden Ansprüche, dadurch gekennzeichnet, daß die äußere Dichtfläche (8) des Dichtelementes (5) eine nach hinten zum Ende hin spitz zulaufende dünne Dichtlippe aufweist.